# EUROPEAN PATENT APPLICATION

(11) **EP 4 503 784 A1**
(43) Date of publication of application: **05.02.2025**
(21) Application number: 22934293.6
(22) Date of filing: 31.03.2022
(51) Int. Cl.: H04W 64/00, H04W 24/10

(54) **MEASUREMENT TIME DETERMINATION METHOD AND APPARATUS**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/084695
(87) International publication number: WO 2023/184456

(57) **Abstract**

Disclosed in the embodiments of the present disclosure are a measurement time determination method and apparatus. The method comprises: receiving positioning configuration information of a network-side device, wherein the positioning configuration information is used for indicating at least two pieces of carrier frequency information of a positioning signal; and receiving a measurement time configuration parameter sent by the network-side device, wherein the measurement time configuration parameter is used for indicating a measurement time of the positioning signal. A terminal device can measure a multi-carrier-frequency positioning signal within a time range specified by a measurement time, such that the positioning accuracy can be improved.

## Description

### TECHNICAL FIELD

The present disclosure relates to the technical field of communications, and in particular to a method and an apparatus for determining a measurement time.

### BACKGROUND

In the related art, a positioning method based on a carrier phase is proposed, and positioning measurement and report are performed according to a fraction part and an integer cycle of the carrier phase. However, there is an ambiguity of the integer cycle of the carrier phase, and there is still much room for improvement in the accuracy of positioning measurement.

### SUMMARY

The embodiments of the present disclosure provides a method and an apparatus for determining a measurement time. A terminal can measure a multi-carrier-frequency positioning signal within a time range specified by a measurement time, such that the positioning accuracy can be improved.

In a first aspect, an embodiment of the present disclosure provides a method for determining a measurement time, applied to a terminal. The method includes: receiving positioning configuration information from a network-side device, in which the positioning configuration information indicates at least two pieces of carrier frequency information of a positioning signal; and receiving a measurement time configuration parameter from the network-side device, in which the measurement time configuration parameter indicates a measurement time of the positioning signal.

In the technical solution, the terminal receives the positioning configuration information from the network-side device, and acquires the at least two pieces of carrier frequency information that may be configured to send or receive the positioning signal. On this basis, in case that the terminal receives the measurement time configuration parameter from the network-side device which indicates the measurement time of the positioning signal, it can be determined that the at least two carrier frequency information can be configured to send or receive the positioning signal and measuring the measurement time of the positioning signal. Therefore, the terminal can measure a multi-carrier-frequency positioning signal within a time range specified by the measurement time, such that the positioning accuracy can be improved.

In a second aspect, an embodiment of the present disclosure provides another method for determining a measurement time, applied to a network-side device. The method includes: sending positioning configuration information to a terminal, in which the positioning configuration information indicates at least two pieces of carrier frequency information of a positioning signal; and sending a measurement time configuration parameter to the terminal, in which the measurement time configuration parameter indicates a measurement time of the positioning signal.

In a third aspect, an embodiment of the present disclosure provides a communication apparatus. The communication apparatus has some or all functions of the terminal for implementing the method described in the first aspect. For example, the functions of the communication apparatus may be functions in some or all of the embodiments in the present disclosure, and may also be functions of separately implementing any one of the embodiments in the present disclosure. The functions may be implemented by hardware and may also be implemented by the hardware executing corresponding software. The hardware or the software includes one or more units or modules corresponding to the above functions.

In an implementation, a structure of the communication apparatus may include a transceiver module and a processing module. The processing module is configured to support the communication apparatus to execute the corresponding functions in the above method. The transceiver module is configured to support a communication between the communication apparatus and other devices. The communication apparatus may further include a storage module. The storage module is configured to couple to the transceiver module and the processing module, and saves a necessary computer program and data of the communication apparatus.

As an example, the processing module may be a processor; the transceiver module may be a transceiver or communication interface; and the storage module may be a memory.

In an implementation, the communication apparatus includes a transceiver module, configured to receive the positioning configuration information from the network-side device, in which the positioning configuration information indicates at least two pieces of carrier frequency information of a positioning signal; and the transceiver module is further configured to receive a measurement time configuration parameter from the network-side device, in which the measurement time configuration parameter indicates a measurement time of the positioning signal.

In a fourth aspect, an embodiment of the present disclosure provides another communication apparatus. The communication apparatus has some or all functions of the network-side device for implementing the method described in the second aspect. For example, the functions of the communication apparatus may be functions in some or all of the embodiments in the present disclosure, and may also be functions of separately implementing any one of the embodiments in the present disclosure. The functions may be implemented by hardware and may also be implemented by the hardware executing corresponding software. The hardware or the software includes one or more units or modules corresponding to the above functions.

In an implementation, a structure of the communication apparatus may include a transceiver module and a processing module. The processing module is configured to support the communication apparatus to execute the corresponding functions in the above method. The transceiver module is configured to support a communication between the communication apparatus and other devices. The communication apparatus may further include a storage module. The storage module is configured to couple to the transceiver module and the processing module, and saves a necessary computer program and data of the communication apparatus.

In an implementation, the communication apparatus includes a transceiver module, configured to send positioning configuration information to a terminal, in which the positioning configuration information indicates at least two pieces of carrier frequency information of a positioning signal; and the transceiver module is further configured to send a measurement time configuration parameter to the terminal, in which the measurement time configuration parameter indicates a measurement time of the positioning signal.

In a fifth aspect, an embodiment of the present disclosure provides a communication device, including a processor. The processor implements the method described in the first aspect when calling a computer program in a memory.

In a sixth aspect, an embodiment of the present disclosure provides a communication device, including a processor. The processor implements the method described in the second aspect when calling a computer program in a memory.

In a seventh aspect, an embodiment of the present disclosure provides a communication device, including a processor and a memory. The memory stores a computer program; and the processor executes the computer program stored in the memory, to enable the communication device to implement the method described in the first aspect.

In an eighth aspect, an embodiment of the present disclosure provides a communication device, including a processor and a memory. The memory stores a computer program; and the processor executes the computer program stored in the memory, to enable the communication device to implement the method described in the second aspect.

In a ninth aspect, an embodiment of the present disclosure provides a communication device, including a processor and an interface circuit. The interface circuit is configured to receive a code instruction and transmit the code instruction to the processor; and the processor is configured to execute the code instruction, to enable the device to implement the method described in the first aspect.

In a tenth aspect, an embodiment of the present disclosure provides a communication device, including a processor and an interface circuit. The interface circuit is configured to receive a code instruction and transmit the code instruction to the processor; and the processor is configured to execute the code instruction, to enable the device to implement the method described in the second aspect.

In an eleventh aspect, an embodiment of the present disclosure provides a communication system, including the communication apparatus described in the third aspect and the communication apparatus described in the fourth aspect, or including the communication device described in the fifth aspect and the communication device described in the sixth aspect, or including the communication device described in the seventh aspect and the communication device described in the eighth aspect, or including the communication device described in the ninth aspect and the communication device described in the tenth aspect.

In a twelfth aspect, an embodiment of the present disclosure provides a computer readable storage medium, for storing an instruction used by the terminal. The instruction, when being executed, enables the terminal to implement the method described in the first aspect.

In a thirteenth aspect, an embodiment of the present disclosure provides a readable storage medium, for storing an instruction used by the network-side device. The instruction, when being executed, enables the network-side device to implement the method described in the second aspect.

In a fourteenth aspect, the present disclosure further provides a computer program product including a computer program. The computer program product, when running on a computer, enables the computer to implement the method described in the first aspect.

In a fifteenth aspect, the present disclosure further provides a computer program product including a computer program. The computer program product, when running on a computer, enables the computer to implement the method described in the second aspect.

In a sixteenth aspect, the present disclosure provides a chip system, including at least one processor and an interface, and used for supporting a terminal to achieve the functions involved in the first aspect, for example, determining or processing at least one of data or information involved in the above method. In a possible design, the chip system further includes a memory storing necessary computer programs and data for the terminal. The chip system may be composed of chips, and may also include a chip and other discrete devices.

In a seventeenth aspect, the present disclosure provides a chip system, including at least one processor and an interface, and used for supporting a network-side device to achieve the functions involved in the second aspect, for example, determining or processing at least one of data or information involved in the above method. In a possible design, the chip system further includes a memory storing necessary computer programs and data for the network-side device. The chip system may be composed of chips, and may also include a chip and other discrete devices.

In an eighteenth aspect, the present disclosure provides a computer program, which, when running on a computer, enables a computer to implement the method described in the first aspect.

In a nineteenth aspect, the present disclosure provides a computer program, which, when running on a computer, enables a computer to implement the method described in the second aspect.

### BRIEF DESCRIPTION OF THE DRAWINGS

In order to more clearly describe the technical solutions in the embodiments of the present disclosure or in the background, the accompanying drawings required for the embodiments of the present disclosure or the background are described below.
FIG. 1 is an architecture diagram of a communication system according to an embodiment of the present disclosure.
FIG. 2 is a flow chart of a method for determining a measurement time according to an embodiment of the present disclosure.
FIG. 3 is a flow chart of another method for determining a measurement time according to an embodiment of the present disclosure.
FIG. 4 is a flow chart of yet another method for determining a measurement time according to an embodiment of the present disclosure.
FIG. 5 is a flow chart of yet another method for determining a measurement time according to an embodiment of the present disclosure.
FIG. 6 is a flow chart of yet another method for determining a measurement time according to an embodiment of the present disclosure.
FIG. 7 is a flow chart of yet another method for determining a measurement time according to an embodiment of the present disclosure.
FIG. 8 is a flow chart of yet another method for determining a measurement time according to an embodiment of the present disclosure.
FIG. 9 is a flow chart of yet another method for determining a measurement time according to an embodiment of the present disclosure.
FIG. 10 is a flow chart of yet another method for determining a measurement time according to an embodiment of the present disclosure.
FIG. 11 is a flow chart of yet another method for determining a measurement time according to an embodiment of the present disclosure.
FIG. 12 is a structural diagram of a communication apparatus according to an embodiment of the present disclosure.
FIG. 13 is a structural diagram of another communication apparatus according to an embodiment of the present disclosure.
FIG. 14 is a structural diagram of a chip according to an embodiment of the present disclosure.

### DETAILED DESCRIPTION

In order to better understand the method and apparatus for determining a measurement time a disclosed in the embodiments of the present disclosure, a communication system applicable to the embodiments of the present disclosure is first described below.

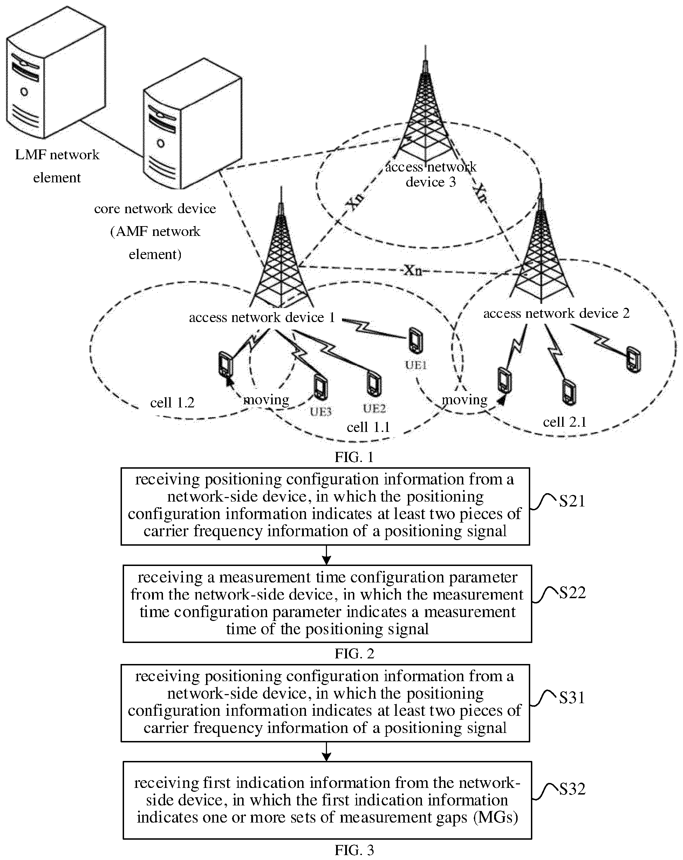

Referring to FIG. 1, FIG. 1 is a schematic diagram of a communication system according to an embodiment of the present disclosure. As shown in FIG. 1, the communication system may include an access network device, a plurality of terminals, and a core network device The access network devices communicate with each other in a wired or wireless way, for example, through an Xn interface in FIG. 1. The access network device may cover one or more cells. For example, an access network device 1 covers a cell 1.1 and a cell 1.2; and an access network device 2 covers a cell 2.1. The terminal may camp on the access network device in one of the cells, and is in a connected state. Further, the terminal may be switched from the connected state to a inactive state (i.e., a non-connected state) through a RRC release process. The terminal in the non-connected state may camp on a source cell, and perform uplink and/or downlink transmission with the access network device in the source cell according to a transmission parameter of the terminal in the source cell. The terminal in the non-connected state may also be moved into a new cell, and perform uplink and/or downlink transmission with an access network device in the new cell according to a transmission parameter of the terminal in the new cell.

It needs to be noted that FIG. 1 is only an exemplary framework diagram. A number of nodes, a number of cells, and a state of the terminal included in FIG. 1 are not limited. In addition to functional nodes shown in FIG. 1, it may further include other nodes, such as the core network device, a gateway device, an application server, etc., which are not limited. The access network devices communicate with the core network device in a wired or wireless way, for example, through a next generation (NG) interface;

The access network device is mainly used for implementing at least one function of resource scheduling, radio resource management, and radio resource control of the terminal. Specifically, the access network device may include a base station, a wireless access point, a transmission reception point (TRP), a transmission point (TP), and any one of other access nodes. In the embodiments of the present disclosure, a device for implementing the functions of the access network device may be an access network device, and may also be an apparatus that can support the access network device to implement the functions, such as a chip system. The apparatus may be installed in the access network device or matched with the access network device. In the technical solutions according to the embodiments of the present disclosure, the apparatus for implementing the functions of the access network device being the access network device is taken as an example to describe the technical solutions according to the embodiments of the present disclosure.

The core network device may include an access and mobility management function (AMF) network element and/or a location management function (LMF) network element. Optionally, the LMF network element includes a location server. The location server may be implemented as any one of: a LMF, an enhanced serving mobile location centre (E-SMLC), secure user plane location (SUPL), and a SUPL location platform (SUPL SLP).

The terminal is an entity on a user side for receiving or sending a signal, such as a mobile phone. The terminal may also be called a terminal device, a user equipment (UE), a mobile station (MS), a mobile terminal (MT), etc. The terminal may be a vehicle with a communication function, an intelligent vehicle, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the present disclosure do not limit a specific technology and a specific device form used by the terminals.

The AMF network element is mainly responsible for access authentication of the terminal, mobility management, signaling interaction between various functional network elements and other works, such as, management on a user registration state, a user connection state, user registration into a network, tracking area update, user authentication when switching cells, key security, etc.

The LMF network element is mainly responsible for providing a positioning service for the terminal and other devices.

It needs to be noted that the technical solutions of the embodiments of the present disclosure may be applied to various communication systems, for example, a long term evolution (LTE) system, a 5th generation (5G) mobile communication system, a 5G new radio (NR) system, or other future new mobile communication systems. It needs to be noted that a sidelink in the embodiments of the present disclosure may further be called a side link or a direct link.

It may be understood that the communication systems described in the embodiments of the present disclosure are to describe the technical solutions of the embodiments of the present disclosure more clearly, and do not constitute a limitation to the technical solutions according to the embodiments of the present disclosure. It may be known for those skilled in the art that with the evolution of a system architecture and the emergence of a new service scenario, the technical solutions according to the embodiments of the present disclosure is also applicable to similar technical problems.

In the related art, a positioning method based on a carrier phase is proposed, and positioning measurement and report are performed according to a fraction part and an integer cycle of the carrier phase. The fraction part of the carrier phase refers to a portion that is less than one complete cycle, being a portion that is less than one cycle in a phase difference between a reference signal generated by a receiving end and a carrier signal from a sending point, or a portion that is less than one cycle in a phase of the carrier signal received by the receiving end from the sending point. The integer cycle corresponds to an exact number of whole cycles, excluding the fraction part that is less than one cycle. Due to the ambiguity of the integer cycle of the carrier phase, there is still much room for improvement in the accuracy of positioning measurement.

In the invention of the present disclosure, in order to solve the ambiguity of whole cycles of the carrier phase, a multi-carrier frequency is introduced into a new radio access technology (NR). A plurality of carrier frequencies are used to transmit positioning signals, and a plurality of carrier frequencies have different wavelengths but go through the same transmission distance, which can better solve the ambiguity of whole cycles. However, how to configure the measurement time for a positioning signal of a multi-carrier frequency is a problem to be solved. The measurement time may include a measurement gap (MG) and a processing window. There is no relevant method at present.

In view of the above, the embodiments of the present disclosure provide a method and an apparatus for determining a measurement time, so as to at least solve the problems in the related art.

Referring to FIG. 2, FIG. 2 is a flow chart of a method for determining a measurement time according to an embodiment of the present disclosure.

As shown in FIG. 2, the method is applied to a terminal, and may include, but is not limited to, the following steps at S21- S22.

At S21, positioning configuration information is received from a network-side device, in which the positioning configuration information indicates at least two pieces of carrier frequency information of a positioning signal.

In the embodiments of the present disclosure, the terminal receives the positioning configuration information from the network-side device, and the positioning configuration information indicates the at least two pieces of carrier frequency information of the positioning signal, which enables the terminal to determine that the at least two pieces of carrier frequency information may be configured to send or receive the positioning signal.

In some embodiments, the positioning signals include a positioning reference signal (PRS) or other signals for positioning.

Of course, in the embodiments of the present disclosure, the positioning signals may also be signals other than the PRS; and with the continuous progress of technology, the positioning signals may also be other new signals for positioning, which is not specifically limited in the embodiments of the present disclosure.

In some embodiments, the network-side device includes at least one of a core network device or an access network device.

The core network device in the embodiments of the present disclosure may include a LMF network element. Optionally, the LMF network element includes a location server. The location server may be implemented as any one of: a LMF, an E-SMLC, a SUPL, and a SUPL SLP.

At S22, a measurement time configuration parameter is received from the network-side device, in which the measurement time configuration parameter indicates a measurement time of the positioning signal.

In the embodiments of the present disclosure, the terminal receives the positioning configuration information from the network-side device, and acquires the at least two pieces of carrier frequency information that may be configured to send or receive the positioning signal. On this basis, in case that the terminal receives the measurement time configuration parameter from the network-side device which indicates the measurement time of the positioning signal, it may be determined that the at least two carrier frequency information may be configured to send or receive the positioning signal and measure the measurement time of the positioning signal. Therefore, the terminal can measure a multi-carrier-frequency positioning signal within a time range specified by the measurement time, such that the positioning accuracy can be improved.

In some embodiments, the positioning signal is used in a positioning method based on a carrier phase.

In the positioning method based on the carrier phase, a content that is needed to be measured and reported includes at least one of a fraction part or whole cycles of the carrier phase. The fraction part of the carrier phase refers to a decimal fraction part being smaller than one whole cycle, being a part of a phase difference between a reference signal generated by a receiving end (the terminal or the network-side device) and a carrier signal from a sending point (the network-side device or the terminal), which is smaller than one whole cycle, or a part of a phase of the carrier signal received by the receiving end from the sending point, which is smaller than one whole cycle. The whole cycles corresponds to an integer number of whole cycles, except for the fraction part smaller than one whole cycle.

It needs to be noted that the network-side device sends the positioning configuration information to the terminal, and the positioning configuration information indicates the at least two pieces of carrier frequency information of the positioning signal. In addition, the network-side device may send the measurement time configuration parameter to the terminal to indicate measurement times of positioning signals on at least two carrier frequencies.

When the positioning signals on the at least two carrier frequencies are simultaneously transmitted, a MG may be configured for the at least two carrier frequencies, or a processing window may be configured for the at least two carrier frequencies.

In some embodiments, when the positioning signals on the at least two carrier frequencies are not simultaneously transmitted, a MG may be configured for one carrier frequency of the at least two carrier frequencies may be configured as, and a processing window may be configured for the other carrier frequency of the at least two carrier frequencies.

Exemplarily, when the positioning signals on the at least two carrier frequencies are not simultaneously transmitted, a MG may be configured for one of the two carrier frequencies, and a processing window may be configured for the other of the two carrier frequencies.

In the embodiments of the present disclosure, the positioning signal is used for measuring in the positioning method based on the carrier phase. In case of determining that the at least two pieces of carrier frequency information may be configured to send or receive the positioning signal and measure the measurement time of the positioning signal, as the plurality of carrier frequencies with different wavelengths go through the same transmission distance, the accuracy of positioning measurement can be improved by measuring the positioning signals on the at least two carrier frequencies.

Referring to FIG. 3, FIG. 3 is a flow chart of another method for determining a measurement time according to an embodiment of the present disclosure.

As shown in FIG. 3, the method is applied to a terminal, and may include, but is not limited to, the following steps at S31-S32.

At S31, positioning configuration information is received from a network-side device, in which the positioning configuration information indicates at least two pieces of carrier frequency information of a positioning signal.

The relevant description of S31 in this embodiment of the present disclosure may refer to the relevant description in the above example, which is not repeated here.

At S32, first indication information is received from the network-side device, in which the first indication information indicates one or more MG sets.

It may be understood that in the embodiments of the present disclosure, the terminal receives the first indication information from the network-side device. The first indication information indicates one or more MG sets. When the terminal sends or receives and measures the positioning signals on the at least two carrier frequencies, the terminal may use the same MG set and may also use a plurality of MG sets. When the terminal sends or receives and measures the positioning signals on the at least two carrier frequencies, the terminal uses different MGs respectively.

In some embodiments, the first indication information includes first radio resource control (RRC), and the first RRC indicates parameter information of each MG set.

In the embodiments of the present disclosure, the first indication information includes first RRC and indicates via the first RRC the parameter information of each MG set.

It may be understood that in case that the first indication information indicates one MG set, the first RRC indicates the parameter information of the one MG set. In case that the first indication information indicates a plurality of MG sets, the first RRC indicates the parameter information of each MG set in the plurality of MG sets.

In some embodiments, the first RRC further indicates a carrier frequency applicable to each MG set.

It may be understood that in case that the first indication information indicates one MG set, the first RRC further indicates a carrier frequency applicable to the one MG set. In case that the first indication information indicates a plurality of MG sets, the first RRC further indicates a carrier frequency applicable to each MG set in the plurality of MG sets. The carrier frequency applicable to each MG set in the plurality of MG sets may be same or different.

In this embodiment of the present disclosure, the terminal receives the first indication information from the network-side device; and the first indication information includes the first RRC that indicates one or more MG sets. In case that the first indication information indicates one MG set, the first RRC indicates the parameter information of the one MG set and the carrier frequency applicable to the one MG set. In case that the first indication information indicates a plurality of MG sets, the first RRC indicates the parameter information of each MG set in the plurality of MG sets and the carrier frequency applicable to each MG set in the plurality of MG sets. The carrier frequency applicable to each MG set in the plurality of MG sets may be same or different. Therefore, the terminal may determine a MG configuration required to be used for measuring the positioning signals on different carrier frequencies according to the first indication information, thus using the MG configuration to measure the positioning signals on the carrier frequencies.

Exemplarily, the terminal receives the positioning configuration information from the network-side device, in which the positioning configuration information indicates the two carrier frequencies F1 and F2 for the positioning signals; and the terminal receives the first indication information from the network-side device, in which the first indication information includes the first RRC, and the first RRC indicates the parameter information of two MG sets and the carrier frequency applicable to each MG set. For example, the first RRC indicates the parameter information of the first MG set and the carrier frequency F1 applicable to the first MG set, and indicates the parameter information of the second MG set and the carrier frequency F2 applicable to the second MG set, such that the terminal may determine parameter information of which MG sets correspond to the carrier frequency F1 and the carrier frequency F2 respectively, so as to use the parameter information of the corresponding MGs to measure the positioning signals on the carrier frequencies.

Of course, in the above example, the first RRC may further indicate parameter information of one MG set and the carrier frequency applicable to the one MG set. Assuming that the first RRC indicates the one MG set is applicable to the carrier frequencies F1 and F2, then the terminal may determine both the carrier frequencies F1 and F2 correspond to the parameter information of the one MG set, so as to use the parameter information of the corresponding MGs to measure the positioning signals on the carrier frequencies.

It needs to be noted that the above example is only an example for convenience in understanding this solution, which is not a specific limitation to the embodiments not disclosed herein. The positioning configuration information from the network-side device may include three or more pieces of carrier frequency information, etc.

In some embodiments, the first indication information includes a second RRC and a first medium access control control element (MAC CE). The second RRC is used for configuring a plurality of MG IDs and parameter information of a MG corresponding to each MG ID. The first MAC CE indicates one or more activated MG IDs.

In this embodiment of the present disclosure, the first indication information includes the second RRC and the first MAC CE.

The second RRC is used for configuring a plurality of MG IDs and parameter information of a MG corresponding to each MG ID.

In the embodiments of the present disclosure, the terminal receives the first indication information from the network-side device, in which the first indication information includes the second RRC and the first MAC CE; the second RRC is used for configuring the plurality of MG IDs and parameter information of the MG corresponding to each MG ID; and the first MAC CE indicates one or more activated MG IDs.

In case that the first indication information indicates one MG set, the second RRC in the first indication information may configure a plurality of MG IDs and the parameter information of the MG corresponding to each MG ID; and the first MAC CE in the first indication information may indicate one activated MG ID, such that the first indication information indicates the parameter information of the MG corresponding to the one activated MG ID, which thus indicates parameter information of one MG set.

In case that the first indication information indicates a plurality of MG sets, the second RRC in the first indication information may configure a plurality of MG IDs and the parameter information of the MG corresponding to each MG ID; and the first MAC CE in the first indication information may indicate a plurality of activated MG IDs, such that the first indication information indicates the parameter information of the MGs corresponding to the plurality of activated MG IDs, which thus indicates parameter information of the plurality of MG sets.

Exemplarily, in case that the first indication information indicates one MG set, the second RRC in the first indication information may configure 3 MG IDs and the parameter information of the MG corresponding to each MG ID; and the first MAC CE in the first indication information may indicate the activated 2^{nd} MG ID in the 3 MG IDs, such that the first indication information may indicate the parameter information of the MG corresponding to the activated 2^{nd} MG ID in the 3 MG IDs, which thus indicates parameter information of one MG set.

Of course, the first indication information may further indicate two MG sets, the second RRC in the first indication information may configure 5 MG IDs and the parameter information of the MG corresponding to each MG ID, and the first MAC CE in the first indication information may indicate the activated 2^{nd} MG ID and the activated 3^{rd} MG ID in the 5 MG IDs, such that the first indication information may indicate the parameter information of the MGs corresponding to the activated 2^{nd} MG ID and the activated 3^{rd} MG ID in the 5 MG IDs, which thus indicates parameter information of the two MG sets.

It needs to be noted that the above example is only an example for convenience in understanding this solution, which is not a specific limitation to the embodiments not disclosed herein. The first indication information may further indicate three or more MG sets, and the second RRC may configure a plurality of MG IDs, etc.

In some embodiments, the first MAC CE further indicates a carrier frequency applicable to each activated MG ID.

It may be understood that in case that the first indication information indicates one MG set, the first MAC CE further indicates a carrier frequency applicable to one activated MG ID. In case that the first indication information indicates a plurality of MG sets, the first MAC CE further indicates carrier frequencies applicable to a plurality of activated MG IDs. The carrier frequency applicable to each MG set in the plurality of MG sets may be same or different.

In the embodiments of the present disclosure, the terminal receives the first indication information from the network-side device, in which the first indication information includes the second RRC that indicates one or more MG sets. In case that the first indication information indicates one MG set, the second RRC in the first indication information may configure a plurality of MG IDs and parameter information of the MG corresponding to each MG ID; and the first MAC CE in the first indication information may indicate one activated MG ID and a carrier frequency applicable to the one activated MG ID. In case that the first indication information indicates a plurality of MG sets, the second RRC in the first indication information may configure a plurality of MG IDs and parameter information of the MG corresponding to each MG ID; and the first MAC CE in the first indication information may indicate a plurality of activated MG IDs and carrier frequencies applicable to the plurality of activated MG IDs. The carrier frequencies applicable to the plurality of activated MG IDs may be the same or different. Therefore, the terminal may determine a MG configuration required to be used for measuring the positioning signals on different carrier frequencies according to the first indication information, thus using the MG configuration to measure the positioning signals on the carrier frequencies.

Exemplarily, the terminal receives the positioning configuration information from the network-side device, in which the positioning configuration information indicates two carrier frequencies F1 and F2 for the positioning signals. The terminal receives the first indication information from the network-side device, in which the first indication information includes the second RRC and the first MAC CE. The second RRC may configure 5 MG IDs and the parameter information of the MG corresponding to each MG ID. The first MAC CE may indicate the activated 2^{nd} MG ID and the activated 3^{rd} MG ID in the 5 MG IDs and carrier frequencies applicable to the activated 2^{nd} MG ID and the activated 3^{rd} MG ID. For example, the first MAC CE indicates the carrier frequency applicable to the 2^{nd} MG ID is the carrier frequency F1, and the carrier frequency applicable to the 3^{rd} MG ID is the carrier frequency F2, such that the terminal may determine parameter information of which MG sets needs to be used for measurement on the carrier frequency F1 and the carrier frequency F2 respectively, so as to use the parameter information of the corresponding MGs to measure the positioning signals on the carrier frequencies.

Of course, in the above example, the first MAC CE may further indicate one activated MG ID is applicable to both the carrier frequency F1 and the carrier frequency F2, and then the terminal may determine the parameter information of the MG corresponding to the one activated MG ID needs to be used for measurement on the carrier frequency F1 and the carrier frequency F2 respectively, so as to use the parameter information of the corresponding MGs to measure the positioning signals on the carrier frequencies.

It needs to be noted that the above example is only an example for convenience in understanding this solution, which is not a specific limitation to the embodiments not disclosed herein. The positioning configuration information from the network-side device may include three or more pieces of carrier frequency information, etc.

In some embodiments, the parameter information of each MG includes at least one of a period, a slot offset, or a gap duration.

Exemplarily, the period may be 20 ms, 40 ms, 80 ms, 160 ms, etc; and the gap duration may be 1 ms, 1.5 ms, 2 ms, 2.5 ms, 3 ms, 3.5 ms, 4 ms, 4.5 ms, 5 ms, 5.5 ms, 6 ms, etc.

For convenience in understanding, an exemplary embodiment is provided in the embodiments of the present disclosure. The terminal receives the positioning configuration information and the first indication information from the network-side device, in which the positioning configuration information indicates two pieces of carrier frequency information of the positioning signal, and the first indication information includes the first RRC that indicates the parameter information of each MG set and the carrier frequency applicable to each MG set, so as to indicate one or more MG sets.

In case that first indication information indicates the parameter information of one MG set and a carrier frequency applicable to the one MG set. When the parameter information of the MGs includes a period being 40 ms, a slot offset being 2 ms, and a gap duration being 1 ms, the terminal can determine according to the first indication information that the parameter information of the MGs corresponding to the two carrier frequencies for the positioning signals includes the period being 40 ms, the slot offset being 2 ms, and the gap duration being 1 ms. Therefore, the terminal may receive the positioning signals within a time (40 ms*N+2)ms - (40 ms*N+3) ms and measure the positioning signals, where N is a nonnegative integer.

In another exemplary embodiment, the terminal receives the positioning configuration information and the first indication information from the network-side device, in which the positioning configuration information indicates two pieces of carrier frequency information of the positioning signal, and the first indication information includes the second RRC and the first MAC CE. The second RRC is used for configuring 4 MG IDs and parameter information of the MG corresponding to each MG ID, and the first MAC CE indicates the activated 1^{st} MG ID and the activated 2^{nd} MG ID in the 4 MG IDs, and indicates that the activated 1^{st} MG ID and the activated 2^{nd} MG ID correspond to two carrier frequencies for the positioning signals, indicated by the positioning configuration information. In case that the parameter information of the MG corresponding to the activated 1^{st} MG ID includes a period being 20 ms, a slot offset being 2 ms, and a gap duration being 1 ms, and the parameter information of the MG corresponding to the activated 2^{nd} MG ID includes a period being 40 ms, a slot offset being 5 ms, and a gap duration being 1.5 ms, the terminal can determine according to the first indication information that in the two carrier frequencies for the positioning signals, parameter information of a MG corresponding to one carrier frequency includes the period being 20 ms, the slot offset being 2 ms, and the gap duration being 1 ms, and parameter information of a MG corresponding to the other carrier frequency includes the period being 40 ms, the slot offset being 5 ms, and the gap duration being 1.5 ms.

Therefore, the terminal may receive the positioning signals on the one of the carrier frequencies within a time (20 ms*N+2)ms - (20 ms*N+3) ms and measure the positioning signals on the one carrier frequency, as well as may receive the positioning signals on the other of the carrier frequencies within a time (40 ms*M+5)ms - (40 ms*M+6.5) ms and measure the positioning signals on the other carrier frequency, where M and N are nonnegative integers.

In the embodiments of the present disclosure, the terminal may receive the positioning signals within a periodic gap duration and measure the positioning signals, without receiving other downlink channels or signals from the network-side device, for example, a physical downlink control channel (PDCCH), a physical downlink shared channel (PDSCH), a channel state information reference signal (CSI-RS), a physical broadcast channel (PBCH), a synchronization signal block (SSB), etc.

In some embodiments, in case that one MG set is applicable to at least two carrier frequencies, positioning signals on different carrier frequencies are measured within different gap durations, or positioning signals on different carrier frequencies are measured within the same gap duration.

Exemplarily, in case that one MG set is applicable to two carrier frequencies F1 and F2, the positioning signals on F1 may be measured within a first gap duration, and the positioning signals on F2 may be measured within a second gap duration; or the positioning signals on F1 and F2 may be measured within the first gap duration. If the one MG has the period being 40 ms, the slot offset being t0, and the gap duration being 6 ms, the 1^{st} gap duration is within (t0) ms - (t0+6) ms, and the 2^{nd} gap duration is within (t0+40) ms - (t0+46) ms. Then the terminal may measure the positioning signals on F1 within (t0) ms - (t0+6) ms, and measure the positioning signals on F2 within (t0+40) ms - (t0+46) ms. Or, the terminal may measure the positioning signals on F1 and F2 within (t0) - (t0+6) ms, for example, the terminal may measure the positioning signals on F1 within (t0) ms - (t0+3) ms, and measure the positioning signals on F2 within (t0+3) ms - (t0+6) ms. Or, the terminal may measure the positioning signals on F1 and F2 within (t0+40) - (t0+46) ms, for example, the terminal may measure the positioning signals on F1 within (t0+40) ms - (t0+43) ms, and measure the positioning signals on F2 within (t0+43) ms - (t0+46) ms.

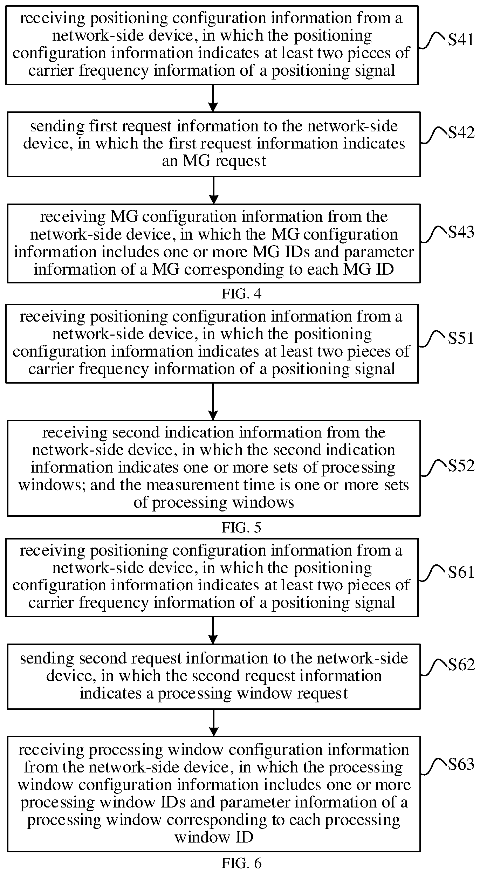

Referring to FIG. 4, FIG. 4 is a flow chart of yet another method for determining a measurement time according to an embodiment of the present disclosure.

As shown in FIG. 4, the method is applied to a terminal, and may include, but is not limited to, the following steps at S41-S43.

At S41, positioning configuration information is received from a network-side device, in which the positioning configuration information indicates at least two pieces of carrier frequency information of a positioning signal.

The relevant description of S41 in this embodiment of the present disclosure may refer to the relevant description in the above example, which is not repeated here.

At S42, first request information is sent to the network-side device, in which the first request information indicates an MG request.

In this embodiment of the present disclosure, the terminal receives the positioning configuration information from the network-side device, and the positioning configuration information indicates the at least two pieces of carrier frequency information of the positioning signal, which enables the terminal to determine that the at least two pieces of carrier frequency information may be configured to send or receive the positioning signal.

In this case, the terminal may send the first request information to the network-side device, and the first request information indicates the MG request, which is to be understood as that the network-side device is requested for indicating a MG configuration.

In some embodiments, the first request information is a first uplink MAC CE, and the first uplink MAC CE includes one or more MG IDs.

In the embodiment of the present disclosure, the terminal receives the positioning configuration information from the network-side device, sends the first request information to the network-side device, and requests the network-side device to indicate MG IDs corresponding to at least two carrier frequencies.

The first request information may be a first uplink MAC CE, and the first uplink MAC CE includes one or more MG IDs.

In some embodiments, the first uplink MAC CE further includes a carrier frequency applicable to a MG ID.

It may be understood that in case that the first request information is the first uplink MAC CE, the first uplink MAC CE includes one or more MG IDs, and further includes a carrier frequency applicable to a MG ID. Therefore, the terminal may inform the network-side device that the requested MG ID is used for measuring the positioning signals on which carrier frequency.

Exemplarily, the terminal receives the positioning configuration information from the network-side device, the positioning configuration information indicates two pieces of information of the carrier frequencies F1 and F2 for the positioning signal; the terminal sends the first request information to the network-side device, sends the first uplink MAC CE that includes one MG ID and carrier frequencies F1 and F2 applicable to the one MG ID, so as to inform the network-side device that the requested MG ID is used for measuring the positioning signals on the carrier frequencies F1 and F2.

It needs to be noted that the terminal sends the first request information to the network-side device, and sends the first uplink MAC CE. The first uplink MAC CE may further include 3 MG IDs, in which the carrier frequency applicable to the 1^{st} MG ID is F1, the carrier frequencies applicable to the 2^{nd} MG ID are F1 and F2, the carrier frequency applicable to the 3^{rd} MG ID is F2, which is not specifically limited in the embodiments of the present disclosure.

At S43, MG configuration information is received from the network-side device, in which the MG configuration information includes one or more MG IDs and parameter information of a MG corresponding to each MG ID.

In the embodiments of the present disclosure, the terminal needs to receive the MG configuration information from the network-side device before sending the first request information to the network-side device.

The MG configuration information includes one or more MG IDs and parameter information of the MG corresponding to each MG ID.

In the embodiments of the present disclosure, the network-side device sends the positioning configuration information to the terminal, and indicates the at least two pieces of carrier frequency information of the positioning signal. Before or after sending the positioning configuration information, or at the same time when sending the positioning configuration information, the network-side device sends the MG configuration information to the terminal, and the MG configuration information includes one or more MG IDs and parameter information of the MG corresponding to each MG ID. The terminal sends the first request information to the network-side device after receiving the above information from the network-side device; and the first uplink MAC CE includes one or more MG IDs, so as to inform the network-side device of the one or more MG IDs requested in the first uplink MAC CE for measuring the positioning signals on the at least two carrier frequencies.

For convenience in understanding, the embodiments of the present disclosure provide an exemplary embodiment.

The terminal receives the MG configuration information from the network-side device. Assuming that the MG configuration information includes 3 MG IDs, i.e. the 1^{st} MG ID, the 2^{nd} MG ID, the 3^{rd} MG ID, and parameter information of the MGs corresponding to the 1^{st} MG ID, the 2^{nd} MG ID, the 3^{rd} MG ID. Then the terminal receives the positioning configuration information from the network-side device to indicate two carrier frequencies F1 and F2 for the positioning signal. The terminal may send the first request information to the network-side device after receiving the above information from the network-side device. Assuming that the first uplink MAC CE includes one MG ID, i.e. the 2^{nd} MG ID, so as to inform the network-side device that the terminal requests parameter information of the MG corresponding to the 2^{nd} MG ID for measuring the positioning signals on the two carrier frequencies F1 and F2.

Or, the terminal may send the first request information to the network-side device after receiving the above information from the network-side device. Assuming that the first uplink MAC CE includes two MG IDs, i.e. the 2^{nd} MG ID, the 3^{rd} MG ID, the carrier frequency F1 applicable to the 2^{nd} MG ID, and the carrier frequency F2 applicable to the 3^{rd} MG ID, so as to inform the network-side device that the terminal requests parameter information of the MG corresponding to the 2^{nd} MG ID for measuring the positioning signals on the carrier frequency F1, and requests parameter information of the MG corresponding to the 3^{rd} MG ID for measuring the positioning signals on the carrier frequency F2.

It needs to be noted that the above example is only an example for convenience in understanding this solution, which is not a specific limitation to the embodiments not disclosed herein. The positioning configuration information from the network-side device may include three or more pieces of carrier frequency information. The MG configuration information from the network-side device may further include three or more MG IDs, the first uplink MAC CE may further include three or more MG IDs, etc.

In some embodiments, the parameter information of each MG includes at least one of a period, a slot offset, or a gap duration.

Exemplarily, the period may be 20 ms, 40 ms, 80 ms, 160 ms, etc; and the gap duration may be 1 ms, 1.5 ms, 2 ms, 2.5 ms, 3 ms, 3.5 ms, 4 ms, 4.5 ms, 5 ms, 5.5 ms, 6 ms, etc.

The terminal may receive the positioning signals within a periodic gap duration and measure the positioning signals, without receiving other downlink channels or signals from the network-side device, for example, a PDCCH, a PDSCH, a CSI-RS, a PBCH, a SSB, etc.

In some embodiments, in case that one MG set is applicable to at least two carrier frequencies, positioning signals on different carrier frequencies are measured within different gap durations, or positioning signals on different carrier frequencies are measured within the same gap duration.

Exemplarily, in case that one MG set is applicable to two carrier frequencies F1 and F2, the positioning signals on F1 may be measured within a first gap duration, and the positioning signals on F2 may be measured within a second gap duration; or the positioning signals on F1 and F2 may be measured within the first gap duration. If the one MG has the period being 40 ms, the slot offset being t0, and the gap duration being 6 ms, the 1^{st} gap duration is within (t0) ms - (t0+6) ms, and the 2^{nd} gap duration is within (t0+40) ms - (t0+46) ms. Then the terminal may measure the positioning signals on F1 within (t0) ms - (t0+6) ms, and measure the positioning signals on F2 within (t0+40) ms - (t0+46) ms. Or, the terminal may measure the positioning signals on F1 and F2 within (t0) - (t0+6) ms, for example, the terminal may measure the positioning signals on F1 within (t0) ms - (t0+3) ms, and measure the positioning signals on F2 within (t0+3) ms - (t0+6) ms. Or, the terminal may measure the positioning signals on F1 and F2 within (t0+40) - (t0+46) ms, for example, the terminal may measure the positioning signal on F1 within (t0+40) ms - (t0+43) ms, and measure the positioning signal on F2 within (t0+43) ms - (t0+46) ms.

Referring to FIG. 5, FIG. 5 is a flow chart of yet another method for determining a measurement time according to an embodiment of the present disclosure.

As shown in FIG. 5, the method is applied to a terminal, and may include, but is not limited to, the following steps at S51-S52.

At S51, positioning configuration information is received from a network-side device, in which the positioning configuration information indicates at least two pieces of carrier frequency information of a positioning signal.

The relevant description of S51 in this embodiment of the present disclosure may refer to the relevant description in the above example, which is not repeated here.

At S52, second indication information is received from the network-side device, in which the second indication information indicates one or more processing window sets; and the measurement time is one or more processing window sets.

It may be understood that in the embodiments of the present disclosure, the terminal receives the second indication information from the network-side device. The second indication information indicates one or more processing window sets. When the terminal sends or receives and measures the positioning signals on the at least two carrier frequencies, the terminal may use the same processing window set and may also use a plurality of processing window sets. When the terminal sends or receives and measures the positioning signals on the at least two carrier frequencies, the terminal uses different processing windows respectively.

In some embodiments, the second indication information includes a third RRC, and the third RRC indicates parameter information of each processing window set.

In the embodiments of the present disclosure, the second indication information includes the third RRC and indicates via the third RRC the parameter information of each processing window set.

It may be understood that in case that the second indication information indicates one processing window set, the third RRC indicates the parameter information of the one processing window set. In case that the second indication information indicates a plurality of processing window sets, the third RRC indicates the parameter information of each processing window set in the plurality of processing window sets.

In some embodiments, the third RRC further indicates a carrier frequency applicable to each processing window set.

It may be understood that in case that the second indication information indicates one processing window set, the third RRC further indicates a carrier frequency applicable to the one processing window set. In case that the second indication information indicates a plurality of processing window sets, the third RRC further indicates a carrier frequency applicable to each processing window set in the plurality of processing window sets. The carrier frequency applicable to each processing window set in the plurality of processing window sets may be the same or different.

In embodiments of the present disclosure, the terminal receives the second indication information from the network-side device; and the second indication information includes the third RRC that indicates one or more processing window sets. In case that the second indication information indicates one processing window set, the third RRC indicates the parameter information of the one processing window set and the carrier frequency applicable to the one processing window set. In case that the second indication information indicates a plurality of processing window sets, the third RRC indicates the parameter information of each processing window set in the plurality of processing window sets and the carrier frequency applicable to each processing window set in the plurality of processing window sets. The carrier frequency applicable to each processing window set in the plurality of processing window sets may be the same or different. Therefore, the terminal may determine a processing window configuration required to be used for measuring the positioning signals on different carrier frequencies according to the second indication information, thus using the processing window configuration to measure the positioning signals on the carrier frequencies.

Exemplarily, the terminal receives the positioning configuration information from the network-side device, in which the positioning configuration information indicates the two carrier frequencies F1 and F2 for the positioning signals; and the terminal receives the second indication information from the network-side device, in which the second indication information includes the third RRC, and the third RRC indicates the parameter information of two processing window sets and the carrier frequency applicable to each processing window set. For example, the third RRC indicates the parameter information of the first processing window set and the carrier frequency F1 applicable to the first processing window set, and indicates the parameter information of the second processing window set and the carrier frequency F2 applicable to the second processing window set, such that the terminal may determine parameter information of which processing window sets correspond to the carrier frequency F1 and the carrier frequency F2 respectively, so as to use the parameter information of the corresponding processing windows to measure the positioning signals on the carrier frequencies.

Of course, in the above example, the third RRC may further indicate parameter information of one processing window set and a carrier frequency applicable to the one processing window set. Assuming that the third RRC indicates the one processing window set is applicable to the carrier frequencies F1 and F2, then the terminal may determine both the carrier frequencies F1 and F2 correspond to the parameter information of the one processing window set, so as to use the parameter information of the corresponding processing windows to measure the positioning signals on the carrier frequencies.

It needs to be noted that the above example is only an example for convenience in understanding this solution, which is not a specific limitation to the embodiments not disclosed herein. The positioning configuration information from the network-side device may include three or more pieces of carrier frequency information, etc.

In some embodiments, the second indication information includes a fourth RRC and a second MAC CE. The fourth RRC is used for configuring a plurality of processing window IDs and parameter information of a processing window corresponding to each processing window ID. The second MAC CE indicates one or more activated processing window IDs.

In some embodiments of the present disclosure, the second indication information includes the fourth RRC and the second MAC CE, in which the fourth RRC is used for configuring the plurality of processing window IDs and the parameter information of the processing window corresponding to each processing window ID; and the second MAC CE indicates one or more activated processing window IDs.

In this embodiment of the present disclosure, the terminal receives the second indication information from the network-side device, in which the second indication information includes the fourth RRC and the second MAC CE; the fourth RRC is used for configuring the plurality of processing window IDs and the parameter information of the processing window corresponding to each processing window ID; and the second MAC CE indicates one or more activated processing window IDs.

In case that the second indication information indicates one processing window set, the fourth RRC in the second indication information may configure a plurality of processing window IDs, and the parameter information of the processing window corresponding to each processing window ID; and the second MAC CE in the second indication information may indicate one activated processing window ID, such that the second indication information indicates the parameter information of the processing window corresponding to the one activated processing window ID, which thus indicates the parameter information of the one processing window set.

In case that the second indication information indicates a plurality of processing window sets, the fourth RRC in the second indication information may configure a plurality of processing window IDs, and the parameter information of the processing window corresponding to each processing window ID; and the second MAC CE in the second indication information may indicate a plurality of activated processing window IDs, such that the second indication information indicates the parameter information of the processing windows corresponding to the plurality of activated processing window IDs, which thus indicates the parameter information of the plurality of processing window sets.

Exemplarily, in case that the second indication information indicates one processing window set, the fourth RRC in the second indication information may configure 3 processing window IDs, and parameter information of the processing window corresponding to each processing window ID; and the second MAC CE in the second indication information may indicate the activated 2^{nd} processing window ID in the 3 processing window IDs, such that the second indication information may indicate the parameter information of the processing window corresponding to the activated 2^{nd} processing window ID in the 3 processing window IDs, which thus indicates the parameter information of the one processing window set.

Of course, the second indication information further indicates two processing window sets, the fourth RRC in the second indication information may configure 5 processing window IDs, and parameter information of the processing window corresponding to each processing window ID; and the second MAC CE in the second indication information may indicate the activated 2^{nd} processing window ID and the activated 3^{rd} processing window ID in the 5 activated processing window IDs, such that the second indication information may indicate parameter information of the processing windows corresponding to the activated 2^{nd} processing window ID and the activated 3^{rd} processing window ID in the 5 processing window IDs, which thus indicates parameter information of the two processing window sets.

It needs to be noted that the above example is only an example for convenience in understanding this solution, which is not a specific limitation to the embodiments not disclosed herein. The second indication information may further indicate three or more processing window sets, and the fourth RRC may configure a plurality of processing window IDs, etc.

In some embodiments, the second MAC CE further indicates a carrier frequency applicable to each activated processing window ID.

It may be understood that in case that the second indication information indicates one processing window set, the second MAC CE further indicates a carrier frequency applicable to one activated processing window ID. In case that the second indication information indicates a plurality of processing window sets, the second MAC CE further indicates carrier frequencies applicable to a plurality of activated processing window IDs. The carrier frequency applicable to each processing window set in the plurality of processing window sets may be the same or different.

In embodiments of the present disclosure, the terminal receives the second indication information of the network-side device; and the second indication information includes the fourth RRC that indicates one or more processing window sets. In case that the second indication information indicates one processing window set, the fourth RRC in the second indication information may configure a plurality of processing window IDs and parameter information of the processing window corresponding to each processing window ID; and the second MAC CE in the second indication information may indicate one activated processing window ID and a carrier frequency applicable to the one activated processing window ID. In case that the second indication information indicates a plurality of processing window sets, the fourth RRC in the second indication information may configure a plurality of processing window IDs and parameter information of the processing window corresponding to each processing window ID; and the second MAC CE in the second indication information may indicate a plurality of activated processing window IDs and carrier frequencies applicable to the plurality of activated processing window IDs. The carrier frequencies applicable to the plurality of processing window IDs may be the same or different. Therefore, the terminal may determine a processing window configuration required to be used for measuring the positioning signals on different carrier frequencies according to the second indication information, thus using the processing window configuration to measure the positioning signals on the carrier frequencies.

Exemplarily, the terminal receives the positioning configuration information from the network-side device, in which the positioning configuration information indicates two carrier frequencies F1 and F2 for the positioning signals. The terminal receives the second indication information from the network-side device, in which the second indication information includes the fourth RRC and the second MAC CE. The fourth RRC may configure 5 processing window IDs and parameter information of the processing window corresponding to each processing window ID. The second MAC CE may indicate the activated 2^{nd} processing window ID and the activated 3^{rd} processing window ID in the 5 MG IDs and carrier frequencies applicable to the activated 2^{nd} processing window ID and activated 3^{rd} processing window ID. For example, the second MAC CE indicates the carrier frequency applicable to the 2^{nd} processing window ID is carrier frequency F1, and the carrier frequency applicable to the 3^{rd} processing window ID is carrier frequency F2, such that the terminal may determine parameter information of which processing window set needs to be used for measurement on the carrier frequency F1 and the carrier frequency F2 respectively, so as to use the parameter information of the corresponding processing windows to measure the positioning signals on the carrier frequencies.

Of course, in the above example, the second MAC CE may further indicate one activated processing window ID is applicable to both the carrier frequency F1 and the carrier frequency F2, and then the terminal may determine the parameter information of the processing window corresponding to the one activated processing window ID needs to be used for measurement on the carrier frequency F1 and the carrier frequency F2 respectively, so as to use the parameter information of the corresponding processing windows to measure the positioning signals on the carrier frequencies.

It needs to be noted that the above example is only an example for convenience in understanding this solution, which is not a specific limitation to the embodiments not disclosed herein. The positioning configuration information from the network-side device may include three or more pieces of carrier frequency information, etc.

In some embodiments, the parameter information of each processing window includes at least one of a period, a starting slot value, a window duration, or a priority of the positioning signal within each processing window.

In the embodiments of the present disclosure, the terminal may receive the positioning signal according to a priority of the positioning signal within a periodic window duration, and measure the received positioning signal.

For convenience in understanding, an exemplary embodiment is provided in the embodiments of the present disclosure The terminal receives the positioning configuration information and the second indication information from the network-side device, in which the positioning configuration information indicates two pieces of carrier frequency information of the positioning signal; the second indication information includes a third RRC that indicates the parameter information of each processing window set and a carrier frequency applicable to each processing window set, so as to indicate one or more processing window sets.

In case that the second indication information indicates parameter information of one processing window set and a carrier frequency applicable to the one processing window set, in which the parameter information of the processing windows includes a period being 40 ms, a starting slot value being 2 ms, and a window duration being 1 ms, and the priority of the positioning signal is the highest, the terminal can determine according to the second indication information that the parameter information of the processing windows corresponding to the two carrier frequencies for the positioning signals includes the period being 40 ms, the starting slot value being 2 ms, and the window duration being 1 ms. Therefore, the terminal may receive the positioning signals within a time (40 ms*N+2) ms - (40 ms*N+3) ms and measure the positioning signals, where N is the nonnegative integer.

In another exemplary embodiment, the terminal receives the positioning configuration information and the second indication information from the network-side device, in which the positioning configuration information indicates two pieces of information of the carrier frequencies for the positioning signals, and the second indication information includes the fourth RRC and the second MAC CE. The fourth RRC is used for configuring 4 processing window IDs and parameter information of the processing window corresponding to each processing window ID, and the second MAC CE indicates the activated 1^{st} processing window ID and the activated 2^{nd} processing window ID in the 4 MG IDs and indicates that the activated 1^{st} positioning signal ID and the activated 2^{nd} processing window ID correspond to two carrier frequencies for the positioning signals, indicated by the positioning configuration information. In case that the parameter information of the processing window corresponding to the activated 1^{st} processing window ID includes a period being 20 ms, a starting slot value being 2 ms, and a window duration being 1 ms, the parameter information of the processing window corresponding to the activated 2^{nd} processing window ID includes a period being 40 ms, a starting slot value being 5 ms, and a window duration being 1.5 ms, and the priority of the positioning signal is the highest, the terminal can determine according to the second indication information that in the two carrier frequencies for the positioning signals, parameter information of a processing window corresponding to one carrier frequency includes the period being 20 ms, the starting slot value being 2 ms, and the window duration being 1 ms, and parameter information of a processing window corresponding to the other carrier frequency includes the period being 40 ms, the starting slot value being 5 ms, and the window duration being 1.5 ms.

Therefore, the terminal may receive the positioning signal on the one of the carrier frequencies within a time (20 ms*N+2) ms - (20 ms*N+3) ms and measure the positioning signal on the one carrier frequency, as well as may receive the positioning signal on the other of the carrier frequencies within a time (40 ms*M+5) ms - (40 ms*M+6.5) ms and measure the positioning signal on the other carrier frequency, where M and N are nonnegative integers.

The priority is mainly compared with PDCCH/PDSCH/CSI-RS corresponding to non ultra-reliable low latency communication (URLLC) and PDCCH/PDSCH/CSI-RS corresponding to URLLC.

Exemplarily, the priority of the positioning signal is higher than the above PDCCH/PDSCH/CSI-RS of the non-URLLC and the above PDCCH/PDSCH/CSI-RS of the URLLC, or the priority of the positioning signal is higher than the PDCCH/PDSCH/CSI-RS of the non-URLLC but lower than the PDCCH/PDSCH/CSI-RS of the URLLC, or the priority of the positioning signal is lower than the above PDCCH/PDSCH/CSI-RS of the non-URLLC and the above PDCCH/PDSCH/CSI-RS of the URLLC.

The PDCCH/PDSCH/CSI-RS corresponding to the URLLC is determined by the priority of a hybrid automatic repeat request-acknowledgement (HARQ-ACK) for the URLLC.

In some embodiments, in case that a processing window set is applicable to the at least two carrier frequencies, positioning signals on different carrier frequencies are measured within different window durations, or positioning signals on different carrier frequencies are measured within the same window duration.

Exemplarily, in case that one processing window set is applicable to two carrier frequencies F1 and F2, the positioning signals on F1 may be measured within a first window duration, and the positioning signals on F2 may be measured within a second window duration, or the positioning signals on F1 and F2 may be measured within the first window duration. If the one processing window has the period being 40 ms, the starting slot value being t0, and the window duration being 6 ms, the first window duration is within (t0) ms - (t0+6) ms, and the second window duration is within (t0+40) ms - (t0+46) ms. Then the terminal may measure the positioning signals on F1 within (t0) ms - (t0+6) ms, and measure the positioning signals on F2 within (t0+40) ms - (t0+46) ms. Or, the terminal may measure the positioning signals on F1 and F2 within (t0) ms - (t0+6) ms, for example, the terminal may measure the positioning signals on F1 within (t0) ms - (t0+3) ms, and measure the positioning signals on F2 within (t0+3) ms - (t0+6) ms. Or, the terminal may measure the positioning signals on F1 and F2 within (t0+40) ms - (t0+46) ms, for example, the terminal may measure the positioning signals on F1 within (t0+40) ms - (t0+43) ms, and measure the positioning signals on F2 within (t0+43) ms - (t0+46) ms.

Referring to FIG. 6, FIG. 6 is a flow chart of yet another method for determining a measurement time according to an embodiment of the present disclosure.

As shown in FIG. 6, the method is applied to a terminal, and may include, but is not limited to, the following steps at S61-S63.

At S61, positioning configuration information is received from a network-side device, in which the positioning configuration information indicates at least two pieces of carrier frequency information of a positioning signal.

The relevant description of S61 in this embodiment of the present disclosure may refer to the relevant description in the above example, which is not repeated here.

At S62, second request information is sent to the network-side device, in which the second request information indicates a processing window request.

In this embodiment of the present disclosure, the terminal receives the positioning configuration information from the network-side device, and the positioning configuration information indicates the at least two pieces of carrier frequency information of the positioning signal, so as to enable the terminal to determine that the at least two pieces of carrier frequency information may be configured to send or receive the positioning signal.

In this case, the terminal may send the second request information to the network-side device, and the second request information indicates the processing window request, which may be understood as requesting the network-side device to indicate a configuration of each processing window.

In some embodiments, the second request information is a second uplink MAC CE, and the second uplink MAC CE includes one or more processing window IDs.

In embodiments of the present disclosure, the terminal receives the positioning configuration information from the network-side device, sends the second request information to the network-side device, and requests the network-side device to indicate configurations of the MGs corresponding to the at least two carrier frequencies.

The second request information may be a second uplink MAC CE, and the second uplink MAC CE includes one or more processing window IDs.

In some embodiments, the second uplink MAC CE further includes a carrier frequency applicable to each processing window ID.

It may be understood that in case that the second request information is the second uplink MAC CE, the second uplink MAC CE includes one or more processing window IDs, and further includes a carrier frequency applicable to the processing window ID. Therefore, the terminal may inform the network-side device that the requested processing window ID is used for measuring the positioning signals on which carrier frequency.

Exemplarily, the terminal receives the positioning configuration information from the network-side device, the positioning configuration information indicates two pieces of information of the carrier frequencies F1 and F2 for the positioning signal; the terminal sends the second request information to the network-side device, sends the second uplink MAC CE that includes one processing window ID, and carrier frequencies F1 and F2 applicable to the one processing window ID, so as to inform the network-side device that the requested processing window ID is used for measuring the positioning signals on the carrier frequencies F1 and F2.

It needs to be noted that the terminal sends the second request information to the network-side device, and sends the second uplink MAC CE. The second uplink MAC CE may further include 3 processing window IDs, in which the carrier frequency applicable to the 1^{st} processing window ID is F1, the carrier frequencies applicable to the 2^{nd} processing window ID is F1 and F2, the carrier frequency applicable to the 3^{rd} processing window ID is F2 and the like, which is not specifically limited in the embodiments of the present disclosure.

At S63, processing window configuration information is received from the network-side device, in which the processing window configuration information includes one or more processing window IDs and parameter information of a processing window corresponding to each processing window ID.

In embodiments of the present disclosure, the terminal needs to receive the processing window configuration information from the network-side device before sending the second request information to the network-side device.

The processing window configuration information includes one or more processing window IDs and parameter information of the processing window corresponding to each processing window ID.

In embodiments of the present disclosure, the network-side device sends the positioning configuration information to the terminal, and indicates the at least two pieces of carrier frequency information of the positioning signal. Before or after sending the positioning configuration information, or at the same time when sending the positioning configuration information, the network-side device sends the processing window configuration information to the terminal; and the processing window configuration information includes one or more processing window IDs and parameter information of the processing window corresponding to each processing window ID. The terminal sends the second request information to the network-side device after receiving the above information from the network-side device; and the second uplink MAC CE includes one or more processing window IDs, so as to inform the network-side device of the one or more processing window IDs requested in the second uplink MAC CE for measuring the positioning signals on the at least two carrier frequencies.

For convenience in understanding, the embodiments of the present disclosure provides an exemplary embodiment.

The terminal receives the processing window configuration information from the network-side device. Assuming that the processing window configuration information includes 3 processing window IDs, i.e. the 1^{st} processing window ID, the 2^{nd} processing window ID, the 3^{rd} processing window ID, and parameter information of the processing windows corresponding to the 1^{st} processing window ID, the 2^{nd} processing window ID, the 3^{rd} processing window ID. Then the terminal receives the positioning configuration information from the network-side device to indicate two carrier frequencies F1 and F2 for the positioning signal. The terminal may send the second request information to the network-side device after receiving the above information from the network-side device. Assuming that the second uplink MAC CE includes one processing window ID, i.e. the 2^{nd} processing window ID, so as to inform the network-side device that the terminal requests parameter information of the processing window corresponding to the 2^{nd} processing window ID for measuring the positioning signals on the two carrier frequencies F1 and F2.

Or, the terminal may send the second request information to the network-side device after receiving the above information from the network-side device. Assuming that the second uplink MAC CE includes two processing window IDs, i.e. the 2^{nd} processing window ID, the 3^{rd} processing window ID, the carrier frequency F1 applicable to the 2^{nd} processing window ID, and the carrier frequency F2 applicable to the 3^{rd} processing window ID, so as to inform the network-side device that the terminal requests parameter information of the processing window corresponding to the 2^{nd} processing window ID for measuring the positioning signals on the carrier frequency F1, and requests parameter information of the processing window corresponding to the 3^{rd} processing window ID for measuring the positioning signals on the carrier frequency F2.

It needs to be noted that the above example is only an example for convenience in understanding this solution, which is not a specific limitation to the embodiments not disclosed herein. The positioning configuration information from the network-side device may include three or more pieces of carrier frequency information. The MG configuration information from the network-side device may further include three or more processing window IDs, the first uplink MAC CE may further include three or more processing window IDs, etc.

It needs to be noted that the above example is only an example for convenience in understanding this solution, which is not a specific limitation to the embodiments not disclosed herein. The positioning configuration information from the network-side device may include three or more pieces of carrier frequency information. The second uplink MAC CE may further include three or more processing window IDs, etc. The processing window configuration information from the network-side device may further include three or more processing window IDs, etc.

In some embodiments, the parameter information of each processing window includes at least one of a period, a starting slot value, a window duration, or a priority of the positioning signal within each processing window.

Exemplarily, the period may be 20 ms, 40 ms, 80 ms, 160 ms, etc; and the window duration may be 1 ms, 1.5 ms, 2 ms, 2.5 ms, 3 ms, 3.5 ms, 4 ms, 4.5 ms, 5 ms, 5.5 ms, 6 ms, etc.

In the embodiments of the present disclosure, the terminal may receive the positioning signal according to a priority of the positioning signal within a periodic window duration, and measure the received positioning signal.

The priority is mainly compared with PDCCH/PDSCH/CSI-RS corresponding to non-URLLC and PDCCH/PDSCH/CSI-RS corresponding to URLLC.

Exemplarily, the priority of the positioning signal is higher than the above PDCCH/PDSCH/CSI-RS of the non-URLLC and the above PDCCH/PDSCH/CSI-RS of the URLLC, or the priority of the positioning signal is higher than the PDCCH/PDSCH/CSI-RS of the non-URLLC but lower than the PDCCH/PDSCH/CSI-RS of the URLLC, or the priority of the positioning signal is lower than the above PDCCH/PDSCH/CSI-RS of the non-URLLC and the above PDCCH/PDSCH/CSI-RS of the URLLC.

The PDCCH/PDSCH/CSI-RS corresponding to the URLLC is determined by the priority of a HARQ-ACK for the URLLC.

In some embodiments, in case that a processing window set is applicable to the at least two carrier frequencies, positioning signals on different carrier frequencies are measured within different window durations, or positioning signals on different carrier frequencies are measured within the same window duration.

Exemplarily, in case that one processing window set is applicable to two carrier frequencies F1 and F2, the positioning signals on F1 may be measured within a first window duration, and the positioning signals on F2 may be measured within a second window duration, or the positioning signals on F1 and F2 may be measured within the first window duration. If the one processing window has the period being 40 ms, the starting slot value being t0, and the window duration being 6 ms, the first window duration is within (t0) ms - (t0+6) ms, and the second window duration is within (t0+40) ms - (t0+46) ms. Then the terminal may measure the positioning signals on F1 within (t0) ms - (t0+6) ms, and measure the positioning signals on F2 within (t0+40) ms - (t0+46) ms. Or, the terminal may measure the positioning signals on F1 and F2 within (t0) ms - (t0+6) ms, for example, the terminal may measure the positioning signals on F1 within (t0) ms - (t0+3) ms, and measure the positioning signals on F2 within (t0+3) ms - (t0+6) ms. Or, the terminal may measure the positioning signals on F1 and F2 within (t0+40) ms - (t0+46) ms, for example, the terminal may measure the positioning signals on F1 within (t0+40) ms - (t0+43) ms, and measure the positioning signals on F2 within (t0+43) ms - (t0+46) ms.

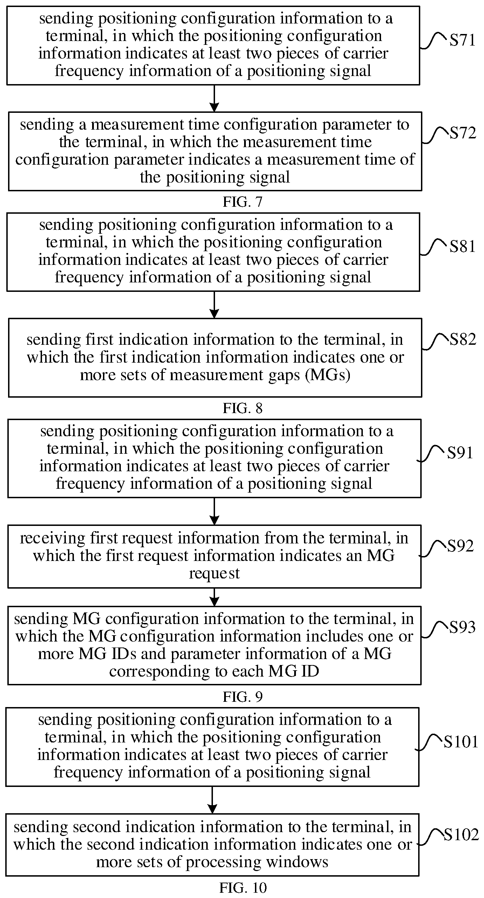

Referring to FIG. 7, FIG. 7 is a flow chart of yet another method for determining a measurement time according to an embodiment of the present disclosure.

As shown in FIG. 7, the method is applied to a network-side device, and may include, but is not limited to, the following steps at S71-S72.

At S71, positioning configuration information is sent to a terminal, in which the positioning configuration information indicates at least two pieces of carrier frequency information of a positioning signal.

In this embodiment of the present disclosure, the terminal receives the positioning configuration information from the network-side device, and the positioning configuration information indicates the at least two pieces of carrier frequency information of the positioning signal, so as to enable the terminal to determine that the at least two pieces of carrier frequency information may be configured to send or receive the positioning signal.

In some embodiments, the positioning signals include a PRS, or other signals for positioning.

Of course, in the embodiments of the present disclosure, the positioning signals may also be signals other than the PRS; and with the continuous progress of technology, the positioning signals may also be other new signals for positioning, which is not specifically limited in the embodiments of the present disclosure.

In some embodiments, the network-side device includes at least one of a core network device or an access network device.

The core network device in the embodiments of the present disclosure may include a LMF network element. Optionally, the LMF network element includes a location server. The location server may be implemented as any one of: a LMF, an E-SMLC, a SUPL, and a SUPL SLP.

At S72, a measurement time configuration parameter is sent to the terminal, in which the measurement time configuration parameter indicates a measurement time of the positioning signal.

In embodiments of the present disclosure, the terminal receives the positioning configuration information from the network-side device, and acquires the at least two pieces of carrier frequency information that may be configured to send or receive the positioning signal. On this basis, in case that the terminal receives the measurement time configuration parameter from the network-side device which indicates the measurement time of the positioning signal, it may be determined that the at least two carrier frequency information may be configured to send or receive the positioning signal and measure the measurement time of the positioning signal. Therefore, the terminal can measure a multi-carrier-frequency positioning signal within a time range specified by the measurement time, such that the positioning accuracy can be improved.

In some embodiments, the positioning signal is used in a positioning method based on a carrier phase.

In the positioning method based on the carrier phase, a content that is needed to be measured and reported includes a fraction part and an integer cycle of the carrier phase. The fraction part of the carrier phase refers to a portion that is less than one complete cycle, being a portion that is less than one cycle in a phase difference between a reference signal generated by a receiving end (the terminal or the network-side device) and a carrier signal from a sending point (the network-side device or the terminal), or a portion that is less than one cycle in a phase of the carrier signal received by the receiving end from the sending point. The integer cycle corresponds to an exact number of whole cycles, excluding the fraction part that is less than one cycle.

It needs to be noted that the network-side device sends the positioning configuration information to the terminal, and the positioning configuration information indicates the at least two pieces of carrier frequency information of the positioning signal. In addition, the network-side device may send the measurement time configuration parameter to the terminal to indicate measurement times of positioning signals on at least two carrier frequencies.

When the positioning signals on the at least two carrier frequencies are simultaneously transmitted, a MG may be configured for the at least two carrier frequencies, or a processing window may be configured for the at least two carrier frequencies.

In some embodiments, when the positioning signals on the at least two carrier frequencies are not simultaneously transmitted, a MG may be configured for one carrier frequency of the at least two carrier frequencies may be configured as, and a processing window may be configured for the other carrier frequency of the at least two carrier frequencies.

Exemplarily, when the positioning signals on the at least two carrier frequencies are not simultaneously transmitted, a MG may be configured for one of the two carrier frequencies, and a processing window may be configured for the other of the two carrier frequencies. In embodiments of the present disclosure, the positioning signal is used for measuring in the positioning method based on the carrier phase. In case of determining that the at least two pieces of carrier frequency information may be configured to send or receive the positioning signal and measure the measurement time of the positioning signal, as the plurality of carrier frequencies with different wavelengths go through the same transmission distance, the accuracy of positioning measurement can be improved by measuring the positioning signals on the at least two carrier frequencies.

Referring to FIG. 8, FIG. 8 is a flow chart of yet another method for determining a measurement time according to an embodiment of the present disclosure.

As shown in FIG. 8, the method is applied to a network-side device, and may include, but is not limited to, the following steps at S81-S82.

At S81, positioning configuration information is sent to a terminal, in which the positioning configuration information indicates at least two pieces of carrier frequency information of a positioning signal.

The relevant description of S81 in this embodiment of the present disclosure may refer to the relevant description in the above example, which is not repeated here.

At S82, first indication information is sent to the terminal, in which the first indication information indicates one or more MG sets.

The description of the first indication information may refer to the relevant description in the above example, which is not repeated here.

Referring to FIG. 9, FIG. 9 is a flow chart of yet another method for determining a measurement time according to an embodiment of the present disclosure.

As shown in FIG. 9, the method is applied to a network-side device, and may include, but is not limited to, the following steps at S91-S93.

At S91, positioning configuration information is sent to a terminal, in which the positioning configuration information indicates at least two pieces of carrier frequency information of a positioning signal.

The relevant description of S91 in this embodiment of the present disclosure may refer to the relevant description in the above example, which is not repeated here.

At S92, first request information is received from the terminal, in which the first request information indicates an MG request.

The description of the first request information may refer to the relevant description in the above example, which is not repeated here.

At S93, MG configuration information is sent to the terminal, in which the MG configuration information includes one or more MG IDs and parameter information of a MG corresponding to each MG ID.

The description of the MG configuration information may refer to the relevant description in the above example, which is not repeated here.

Referring to FIG. 10, FIG. 10 is a flow chart of yet another method for determining a measurement time according to an embodiment of the present disclosure.

As shown in FIG. 10, the method is applied to a network-side device, and may include, but is not limited to, the following steps at S101-S102.

At S101, positioning configuration information is sent to a terminal, in which the positioning configuration information indicates at least two pieces of carrier frequency information of a positioning signal.

The relevant description of S101 in this embodiment of the present disclosure may refer to the relevant description in the above example, which is not repeated here.

At S102, second indication information is sent to the terminal, in which the second indication information indicates one or more processing window sets.

The description of the second indication information may refer to the relevant description in the above example, which is not repeated here.

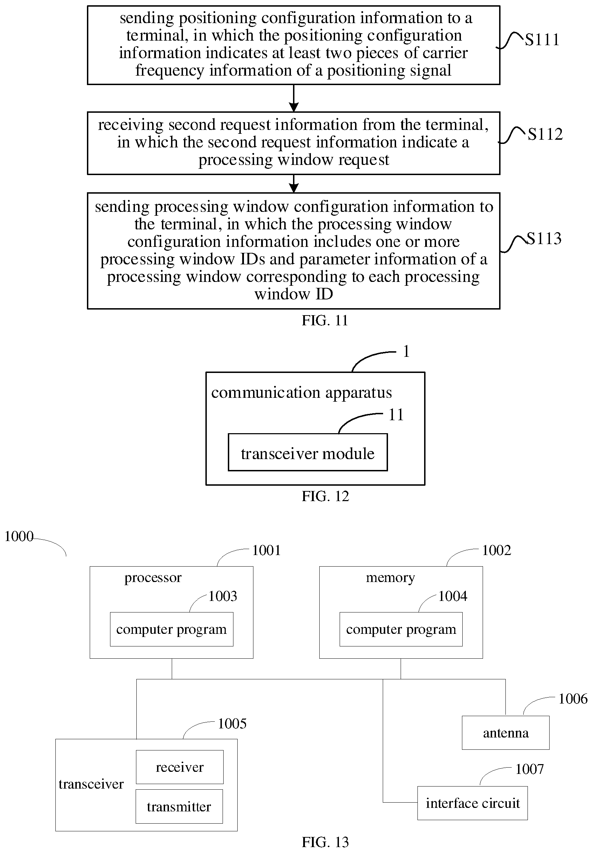

Referring to FIG. 11, FIG. 11 is a flow chart of yet another method for determining a measurement time according to an embodiment of the present disclosure.

As shown in FIG. 11, the method is applied to a network-side device, and may include, but is not limited to, the following steps at S 111-S 112.

At S111, positioning configuration information is sent to a terminal, in which the positioning configuration information indicates at least two pieces of carrier frequency information of a positioning signal.

The relevant description of S111 in this embodiment of the present disclosure may refer to the relevant description in the above example, which is not repeated here.

At S112, second request information is received from the terminal, in which the second request information indicates a processing window request.

The description of the second request information may refer to the relevant description in the above example, which is not repeated here.

At S113, processing window configuration information is sent to the terminal, in which the processing window configuration information includes one or more processing window IDs and parameter information of a processing window corresponding to each processing window ID.

The description of the processing window configuration information may refer to the relevant description in the above example, which is not repeated here.

In the above embodiments according to the present disclosure, the methods according to the embodiments of the present disclosure are introduced respectively from the perspective of the terminal and the network-side device. In order to implement various functions of the methods according to the above embodiments of the present disclosure, the network device and the terminal may include hardware structures and software modules, and various functions are achieved in a form of the hardware structures, the software modules, or the hardware structures plus the software modules. A certain function of the above functions may be executed by the hardware structures, the software modules, or the hardware structures plus the software modules.

Referring to FIG. 12, it is a structural diagram of a communication apparatus 1 according to an embodiment of the present application. The communication apparatus 1 shown in FIG. 12 may include a transceiver module 11 and a processing module. The transceiver module 11 may include a sending module and/or a receiving module, the sending module is configured to implement a sending function, and the receiving module is configured to implement a receiving function. The transceiver module 11 may implement the sending function and/or the receiving function.

The communication apparatus 1 may be a terminal (such as a first terminal in the aforementioned method embodiments), may also be an apparatus in the terminal, and may further be an apparatus that can be matched with the terminal. Or, the communication apparatus 1 may be a network device, may also be an apparatus in the network device, and may further be an apparatus that can be matched with the network device.

When the communication apparatus 1 may be the terminal 1, the transceiver module 11 is configured to receive positioning configuration information from a network-side device, in which the positioning configuration information indicates at least two pieces of carrier frequency information of a positioning signal.

The transceiver module 11 is further configured to receive a measurement time configuration parameter from the network-side device, in which the measurement time configuration parameter indicates a measurement time of the positioning signal.

In some embodiments, the positioning signal is used in a positioning method based on a carrier phase.

In some embodiments, the measurement time is one or more MG sets, in which the transceiver module 11 is specifically configured to receive first indication information from the network-side device, in which the first indication information indicates one or more MG sets.

In some embodiments, the first indication information includes a first RRC, in which the first RRC indicates parameter information of each MG set.

In some embodiments, the first RRC further indicates a carrier frequency applicable to each MG set.

In some embodiments, the first indication information includes a second RRC and a first MAC CE, in which the second RRC is used for configuring a plurality of MG IDs and parameter information of a MG corresponding to each MG ID; and the first MAC CE indicates one or more activated MG IDs.

In some embodiments, the first MAC CE further indicates a carrier frequency applicable to each activated MG ID.

In some embodiments, the transceiver module 11 is further configured to send first request information to the network-side device, in which the first request information indicates an MG request.

In some embodiments, the first request information is a first uplink MAC CE, in which the first uplink MAC CE includes one or more MG IDs.

In some embodiments, the first uplink MAC CE further includes a carrier frequency applicable to each MG ID.

In some embodiments, the transceiver module 11 is further configured to receive MG configuration information from the network-side device, in which the MG configuration information includes one or more MG IDs and parameter information of a MG corresponding to each MG ID.

In some embodiments, the parameter information of each MG includes at least one of a period, a slot offset, or a gap duration.

In some embodiments, in case that one MG set is applicable to at least two carrier frequencies, positioning signals on different carrier frequencies are measured within different gap durations, or positioning signals on different carrier frequencies are measured within the same gap duration.

In some embodiments, the measurement time is one or more processing window sets, in which the transceiver module 11 is specifically configured to receive second indication information of the network-side device, in which the second indication information indicates one or more processing window sets.

In some embodiments, the second indication information includes a third RRC, in which the third RRC indicates parameter information of each processing window set.

In some embodiments, the third RRC further indicates a carrier frequency applicable to each processing window set.

In some embodiments, the second indication information includes a fourth RRC and a second MAC CE, in which the fourth RRC is used for configuring a plurality of processing window IDs and parameter information of a processing window corresponding to each processing window ID; and the second MAC CE indicates one or more activated processing window IDs.

In some embodiments, the second MAC CE further indicates a carrier frequency applicable to each activated processing window ID.

In some embodiments, the transceiver module 11 is further configured to send second request information to the network-side device, in which the second request information indicates a processing window request.

In some embodiments, the second request information is a second uplink MAC CE, and the second uplink MAC CE includes one or more processing window IDs.

In some embodiments, the second uplink MAC CE further includes a carrier frequency applicable to each processing window ID.

In some embodiments, the transceiver module 11 is further configured to receive processing window configuration information from the network-side device, in which the processing window configuration information includes one or more processing window IDs and parameter information of a processing window corresponding to each processing window ID.

In some embodiments, the parameter information of each processing window includes at least one of a period, a starting slot value, a window duration, or a priority of the positioning signals within each processing window.

In some embodiments, in case that one processing window set is applicable to at least two carrier frequencies, positioning signals on different carrier frequencies are measured within different window durations, or positioning signals on different carrier frequencies are measured within the same window duration.

In some embodiments, the positioning signals include a PRS or other signals for positioning.

In some embodiments, the network-side device includes at least one of a core network device or an access network device.

When the communication apparatus 1 may be the terminal, the transceiver module 11 is configured to send the positioning configuration information to the terminal, in which the positioning configuration information indicates at least two pieces of carrier frequency information of a positioning signal.

The transceiver module 11 is further configured to send a measurement time configuration parameter to the terminal, in which the measurement time configuration parameter indicates a measurement time of the positioning signal.

In some embodiments, the positioning signal is used in a positioning method based on a carrier phase.

In some embodiments, the measurement time is one or more MG sets, in which the transceiver module 11 is specifically configured to send the first indication information to the terminal, in which the first indication information indicates the one or more MG sets.

In some embodiments, the first indication information includes a first RRC, in which the first RRC indicates parameter information of each MG set.

In some embodiments, the first RRC further indicates a carrier frequency applicable to each MG set.

In some embodiments, the first indication information includes a second RRC and a first MAC CE, in which the second RRC is used for configuring a plurality of MG IDs and parameter information of a MG corresponding to each MG ID; and the first MAC CE indicates one or more activated MG IDs.

In some embodiments, the first MAC CE further indicates a carrier frequency applicable to each activated MG ID.

In some embodiments, the transceiver module 11 is further configured to receive the first request information from the terminal, in which the first request information indicates an MG request.

In some embodiments, the first request information is a first uplink MAC CE, in which the first uplink MAC CE includes one or more MG IDs.

In some embodiments, the first uplink MAC CE further includes a carrier frequency applicable to each MG ID.

In some embodiments, the transceiver module 11 is further configured to send MG configuration information to the terminal, in which the MG configuration information includes one or more MG IDs and parameter information of a MG corresponding to each MG ID.

In some embodiments, the parameter information of each MG includes at least one of a period, a slot offset, or a gap duration.

In some embodiments, in case that one MG set is applicable to at least two carrier frequencies, positioning signals on different carrier frequencies are measured within different gap durations, or positioning signals on different carrier frequencies are measured within the same gap duration.

In some embodiments, the measurement time is one or more processing window sets, in which the transceiver module 11 is specifically configured to send second indication information to the terminal, in which the second indication information indicates the one or more processing window sets.

In some embodiments, the second indication information includes a third RRC, in which the third RRC indicates parameter information of each processing window set.

In some embodiments, the third RRC further indicates a carrier frequency applicable to each processing window set.

In some embodiments, the second indication information includes a fourth RRC and a second MAC CE, in which the fourth RRC is used for configuring a plurality of processing window IDs and parameter information of a processing window corresponding to each processing window ID; and the second MAC CE is configured to activate at least one or more processing window IDs.

In some embodiments, the second MAC CE further indicates a carrier frequency applicable to each activated processing window ID.

In some embodiments, the transceiver module 11 is further configured to receive second request information from the terminal, in which the second request information indicates a processing window request.

In some embodiments, the second request information is a second uplink MAC CE, and the second uplink MAC CE includes one or more processing window IDs.

In some embodiments, the second uplink MAC CE further includes a carrier frequency applicable to each processing window ID.

In some embodiments, the transceiver module 11 is further configured to send processing window configuration information to the terminal, in which the processing window configuration information includes one or more processing window IDs and parameter information of a processing window corresponding to each processing window ID.

In some embodiments, the parameter information of the processing window includes at least one of a period, a starting slot value, a window duration, or a priority of the positioning signal within each processing window.

In some embodiments, in case that one processing window set is applicable to at least two carrier frequencies, positioning signals on different carrier frequencies are measured within different window durations, or positioning signals on different carrier frequencies are measured within the same window duration.

In some embodiments, the positioning signals include a PRS or other signals for positioning.

In some embodiments, the network-side device includes at least one of a core network device or an access network device.

For the communication apparatus 1 in the above embodiments, a specific manner of each module in the apparatus performing an operation is already described in the method-related embodiments in detail, which is no longer described herein in detail.

The communication apparatus 1 in any one of the above embodiments of the present disclosure has the same or similar beneficial effects as the communication methods in some of the above embodiments, which will not be repeated here.

Referring to FIG. 13, FIG. 13 is a structural diagram of another communication apparatus 1000 according to an embodiment of the present disclosure. The communication apparatus 1000 may be a network-side device, may be a terminal, may be a chip, a chip system, a processor or the like that supports the network-side device to implement the above method, or may also be a chip, chip system, processor or the like that supports the terminal to implement the above method. The communication apparatus 1000 may be used for implementing the method described in any one of the above method embodiments, which may refer to the descriptions in the embodiments of the above methods.

The communication apparatus 1000 may be a network-side device, may be a terminal, may be a chip, a chip system, a processor or the like that supports the network-side device to implement the above method, or may also be a chip, chip system, processor or the like that supports the terminal to implement the above method. The apparatus may be used for implementing the method described in any one of the above method embodiments, which may refer to the descriptions in the embodiments of the above methods.

The communication apparatus 1000 may include one or more processors 1001. The processor 1001 may be a general-purpose processor or a dedicated processor, for example, may be a baseband processor or a central processor. The baseband processor may be used for processing a communication protocol and communication data. The central processor may be used for controlling the communication apparatus (such as a base station, a baseband chip, the terminal, a terminal chip, DU or CU, etc.), executing a computer program, and processing computer program data.

Optionally, the communication apparatus 1000 may further include one or more memories 1002, on which a computer program 1004 may be stored. The processor 1002 executes the computer program 1004, to enable the communication apparatus 1000 to implement the methods described in the above method embodiments. Optionally, the memory 1002 may also store data. The communication apparatus 1000 and the memory 1002 may be set separately or integrated together.

Optionally, the communication apparatus 1000 may further include a transceiver 1005 and an antenna 1006. The transceiver 1005 may be called a transceiver unit, a transceiving machine, or a transceiver circuit, etc., for implementing a transceiver function. The transceiver 1005 may include a receiver and a sender. The receiver may be called a receiving machine or a receiving circuit, etc., for implementing a receiving function; and the sender may be called a sending machine or a sending circuit, etc., for implementing a sending function.

Optionally, the communication apparatus 1000 may further include one or more interface circuits 1007. The interface circuit 1007 is configured to receive a code instruction and transmit the code instruction to the processor 1001. The code instruction is executed by the processor 1001 to enable the communication apparatus 1000 to implement the method described in any one of the method embodiments.

When the communication apparatus 1000 is the terminal, the transceiver 1005 is used for executing S21 and S22 in FIG. 2, S31 and S32 in FIG. 3, S41, S42, and S43 in FIG. 4, S51 and S52 in FIG. 5, and S61, S62, and S63 in FIG. 6.

When the communication apparatus 1000 is the network-side device, the transceiver 1005 is used for executing S71 and S72 in FIG. 7, S81 and S82 in FIG. 8, S91, S92, and S93 in FIG. 9, S101 and S102 in FIG. 10, and S111, S112, and S113 in FIG. 11.

In an implementation, the processor 1001 may include a transceiver for implementing receiving and sending functions. For example, the transceiver may be a transceiver circuit, or an interface, or an interface circuit. The transceiver circuit, the interface or the interface circuit used for implementing the receiving and sending functions may be separated or integrated together. The above transceiver circuit, interface or interface circuit may be used for code/data reading and writing, or the above transceiver circuit, interface or interface circuit may be used for signal transmission or transfer.

In an implementation, the processor 1001 may have a computer program 1003, and the computer program 1003 is running on the processor 1001, which enables the communication apparatus 1000 to execute the method described in any one of the above method embodiments. The computer program 1003 may be solidified in the processor 1001. In this case, the processor 1001 may be implemented in hardware.

In an implementation, the communication apparatus 1000 may include a circuit capable of implementing the sending, receiving or communication function in the forgoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be fabricated using various IC technologies, such as a complementary metal oxide semiconductor (CMOS), an nMetal-Oxide-Semiconductor (NMOS), a positive channel metal oxide semiconductor (PMOS), a bipolar junction transistor (BJT), a bipolar CMOS (BiCMOS), SiGe, GaAs, etc.

The communication apparatus described in each of the above embodiments may be a terminal, which is not limited in the scope of the communication apparatus described in the present disclosure. Moreover, the structure of the communication apparatus may not be limited by FIG. 13. The communication apparatus may be an independent device or a part of a larger device. For example, the communication apparatus may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle-mounted device, a network device, a cloud device, an artificial intelligence device, etc.; and
(6) others, and so forth.

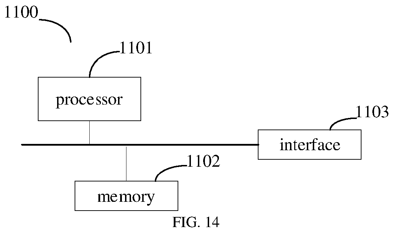

In the case that the communication device may be a chip or a system on chip, please refer to a structure diagram of a chip as illustrated in FIG. 14.

The chip 1100 includes a processor 1101 and an interface 1103, in which the number of processors 1101 may be one or more and the number of interfaces 1103 may be one or more.

In case that the chip is used to implement the functionality of a terminal in an embodiment of the present disclosure, the interface 1103 is configured to receive code instructions and send the code instructions to the processor. The processor 1101 is configured to run the code instructions to perform a method for determining a measurement time as described in some embodiments above.

In case that the chip is used to implement the functionality of a network device in an embodiment of the present disclosure, the interface 1103 is configured to receive code instructions and send the code instructions to the processor. The processor 1101 is configured to run the code instructions to perform a method for determining a measurement time as described in some embodiments above.

Alternately, the chip 1100 further includes a memory 1102, configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as going beyond the protection scope of embodiments of the present disclosure.

A communication system is further provided in embodiments of the disclosure. The system includes a communication device as a terminal and a communication device as a network device in the preceding embodiment of FIG. 12. Alternatively, the system includes a communication device as a terminal and a communication device as a network device in the preceding embodiment of FIG. 13.

A readable storage medium with instructions stored is further provided in the disclosure. When the instructions are executed by a computer, steps in the any one method embodiments are implemented.

A computer program product is further provided in the disclosure. The computer program product implements the functions of the above any one method embodiments when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for determining a measurement time, performed by a terminal, comprising:
receiving positioning configuration information from a network-side device, wherein the positioning configuration information indicates at least two pieces of carrier frequency information of a positioning signal; and
receiving a measurement time configuration parameter from the network-side device, wherein the measurement time configuration parameter indicates a measurement time of the positioning signal.

2. The method according to claim 1, wherein the positioning signal is used in a positioning method based on a carrier phase.

3. The method according to claim 1 or 2, wherein the measurement time is one or more measurement gap (MG) sets, wherein receiving the measurement time configuration parameter from the network-side device comprises:
receiving first indication information from the network-side device, wherein the first indication information indicates the one or more MG sets.

4. The method according to claim 3, wherein the first indication information comprises a first radio resource control (RRC), wherein the first RRC indicates parameter information of each MG set.

5. The method according to claim 4, wherein the first RRC further indicates a carrier frequency applicable to each MG set.

6. The method according to claim 3, wherein the first indication information comprises a second radio resource control (RRC) and a first medium access control control element (MAC CE), wherein the second RRC is used for configuring a plurality of MG identifications (IDs) and parameter information of a MG corresponding to each MG ID; and the first MAC CE indicates one or more activated MG IDs.

7. The method according to claim 6, wherein the first MAC CE further indicates a carrier frequency applicable to each activated MG ID.

8. The method according to claim 1 or 2, further comprising:
sending first request information to the network-side device, wherein the first request information indicates an MG request.

9. The method according to claim 8, wherein the first request information is a first uplink medium access control control element (MAC CE), wherein the first uplink MAC CE comprises one or more MG IDs.

10. The method according to claim 9, wherein the first uplink MAC CE further comprises a carrier frequency applicable to each MG ID.

11. The method according to any one of claims 8-10, further comprising:
receiving measurement gap (MG) configuration information from the network-side device, wherein the MG configuration information comprises one or more MG identifications (IDs) and parameter information of a MG corresponding to each MG ID.

12. The method according to any one of claims 4-7 or claim 11, wherein the parameter information of the MG comprises at least one of a period, a slot offset, or a gap duration.

13. The method according to claim 12, wherein in response to determining that one MG set is applicable to at least two carrier frequencies, positioning signals on different carrier frequencies are measured within different gap durations, or positioning signals on different carrier frequencies are measured within the same gap duration.

14. The method according to claim 1 or 2, wherein the measurement time is one or more processing window sets, wherein receiving the measurement time configuration parameter from the network-side device comprises:
receiving second indication information from the network-side device, wherein the second indication information indicates the one or more processing window sets.

15. The method according to claim 14, wherein the second indication information comprises a third radio resource control (RRC), wherein the third RRC indicates parameter information of each processing window set.

16. The method according to claim 15, wherein the third RRC further indicates a carrier frequency applicable to each processing window set.

17. The method according to claim 14, wherein the second indication information comprises a fourth radio resource control (RRC) and a second medium access control control element (MAC CE), wherein the fourth RRC is used for configuring a plurality of processing window identifications (IDs) and parameter information of a processing window corresponding to each processing window ID; and the second MAC CE indicates one or more activated processing window IDs.

18. The method according to claim 17, wherein the second MAC CE further indicates a carrier frequency applicable to each activated processing window ID.

19. The method according to claim 1 or 2, further comprising:
sending second request information to the network-side device, wherein the second request information indicates a processing window request.

20. The method according to claim 19, wherein the second request information is a second uplink medium access control control element (MAC CE), wherein the second uplink MAC CE comprises one or more processing window identifications (IDs).

21. The method according to claim 20, wherein the second uplink MAC CE further comprises a carrier frequency applicable to each processing window ID.

22. The method according to any one of claims 19-21, further comprising:
receiving processing window configuration information from the network-side device, wherein the processing window configuration information comprises one or more processing window IDs and parameter information of a processing window corresponding to each processing window ID.

23. The method according to any one of claims 15-18 or claim 22, wherein the parameter information of the processing window comprises at least one of a period, a starting slot value, a window duration, or a priority of the positioning signal within each processing window.

24. The method according to claim 23, wherein in response to determining that one processing window set is applicable to at least two carrier frequencies, positioning signals on different carrier frequencies are measured within different window durations, or positioning signals on different carrier frequencies are measured within the same window duration.

25. The method according to any one of claims 1-24, wherein the positioning signals comprise a positioning reference signal (PRS) or other signals for positioning.

26. A method for determining a measurement time, performed by a network-side device, comprising:
sending positioning configuration information to a terminal, wherein the positioning configuration information indicates at least two pieces of carrier frequency information of a positioning signal; and
sending a measurement time configuration parameter to the terminal, wherein the measurement time configuration parameter indicates a measurement time of the positioning signal.

27. The method according to claim 26, wherein the positioning signal is used in a positioning method based on a carrier phase.

28. The method according to claim 26 or 27, wherein the measurement time is one or more measurement gap (MG) sets, wherein sending the measurement time configuration parameter to the terminal comprises:
sending first indication information to the terminal, wherein the first indication information indicates the one or more MG sets.

29. The method according to claim 28, wherein the first indication information comprises a first radio resource control (RRC), wherein the first RRC indicates parameter information of each MG set.

30. The method according to claim 29, wherein the first RRC further indicates a carrier frequency applicable to each MG set.

31. The method according to claim 28, wherein the first indication information comprises a second radio resource control (RRC) and a first medium access control control element (MAC CE), wherein the second RRC is used for configuring a plurality of MG identifications (IDs) and parameter information of a MG corresponding to each MG ID; and the first MAC CE indicates one or more activated MG IDs.

32. The method according to claim 31, wherein the first MAC CE further indicates a carrier frequency applicable to each activated MG ID.

33. The method according to claim 26 or 27, further comprising:
receiving first request information from the terminal, wherein the first request information indicates an MG request.

34. The method according to claim 33, wherein the first request information is a first uplink medium access control control element (MAC CE), wherein the first uplink MAC CE comprises one or more MG IDs.

35. The method according to claim 34, wherein the first uplink MAC CE further comprises a carrier frequency applicable to each MG ID.

36. The method according to any one of claims 33-35, further comprising:
sending measurement gap (MG) configuration information to the terminal, wherein the MG configuration information comprises one or more MG identifications (IDs) and parameter information of a MG corresponding to each MG ID.

37. The method according to any one of claims 29-32 or claim 36, wherein the parameter information of the MG comprises at least one of a period, a slot offset, or a gap duration.

38. The method according to claim 37, wherein in response to determining that one MG set is applicable to at least two carrier frequencies, positioning signals on different carrier frequencies are measured within different gap durations, or positioning signals on different carrier frequencies are measured within the same gap duration.

39. The method according to claim 26 or 27, wherein the measurement time is one or more processing window sets, wherein sending the measurement time configuration parameter to the terminal comprises:
sending second indication information to the terminal, wherein the second indication information indicates the one or more processing window sets.

40. The method according to claim 39, wherein the second indication information comprises a third radio resource control (RRC), wherein the third RRC indicates parameter information of each processing window set.

41. The method according to claim 40, wherein the third RRC further indicates a carrier frequency applicable to each processing window set.

42. The method according to claim 39, wherein the second indication information comprises a fourth radio resource control (RRC) and a second medium access control control element (MAC CE), wherein the fourth RRC is used for configuring a plurality of processing window identifications (IDs) and parameter information of a processing window corresponding to each processing window ID; and the second MAC CE is configured to activate at least one or more processing window IDs.

43. The method according to claim 42, wherein the second MAC CE further indicates a carrier frequency applicable to each activated processing window ID.

44. The method according to claim 26 or 27, further comprising:
receiving second request information from the terminal, wherein the second request information indicates a processing window request.

45. The method according to claim 44, wherein the second request information is a second uplink medium access control control element (MAC CE), wherein the second uplink MAC CE comprises one or more processing window identifications (IDs).

46. The method according to claim 45, wherein the second uplink MAC CE further comprises a carrier frequency applicable to each processing window ID.

47. The method according to any one of claims 44-46, further comprising:
sending processing window configuration information to the terminal, wherein the processing window configuration information comprises one or more processing window IDs and parameter information of a processing window corresponding to each processing window ID.

48. The method according to any one of claims 40-43 or claim 47, wherein the parameter information of the processing window comprises at least one of a period, a starting slot value, a window duration, or a priority of the positioning signal within each processing window.

49. The method according to claim 48, wherein in response to determining that one processing window set is applicable to at least two carrier frequencies, positioning signals on different carrier frequencies are measured within different window durations, or positioning signals on different carrier frequencies are measured within the same window duration.

50. The method according to any one of claims 26-49, wherein the positioning signals comprise a positioning reference signal (PRS) or other signals for positioning.

51. A communication apparatus, comprising
a transceiver module, configured to receive positioning configuration information from a network-side device, wherein the positioning configuration information indicates at least two pieces of carrier frequency information of a positioning signal; and
the transceiver module is further configured to receive a measurement time configuration parameter from the network-side device, wherein the measurement time configuration parameter indicates a measurement time of the positioning signal.

52. A communication apparatus, comprising:
a transceiver module, configured to send positioning configuration information to a terminal, wherein the positioning configuration information indicates at least two pieces of carrier frequency information of a positioning signal; and
the transceiver module is further configured to send a measurement time configuration parameter to the terminal, wherein the measurement time configuration parameter indicates a measurement time of the positioning signal.
